# EUROPÄISCHE PATENTSCHRIFT

(11) **EP 2 847 314 B1**
(45) Veröffentlichungstag und Bekanntmachung des Hinweises auf die Patenterteilung: **31.01.2018**
(21) Anmeldenummer: 13720955.7
(22) Anmeldetag: 07.05.2013
(51) Int. Cl.: C11D 3/39, B01J 31/22

(54) **BLEICHENDES WASCH- ODER REINIGUNGSMITTEL**
BLEACHING LAUNDRY DETERGENT OR CLEANER
DÉTERGENT DE LAVAGE OU DE NETTOYAGE À EFFET BLANCHISSANT

(30) Priorität: 11.05.2012 DE 102012207949
(43) Veröffentlichungstag der Anmeldung: 18.03.2015
(73) Patentinhaber: Henkel AG & Co. KGaA, 40589 Düsseldorf (DE)
(72) Erfinder: HÄTZELT, André, 40591 Düsseldorf (DE); KROPF, Christian, 40724 Hilden (DE); MEYER, Karsten, 91080 Marloffstein (DE); KÄß, Martina, 91052 Erlangen (DE)
(86) Internationale Anmeldenummer: PCT/EP2013/059507
(87) Internationale Veröffentlichungsnummer: WO 2013/167602

(56) Entgegenhaltungen:
- WO-A1-2009/140259
- WO-A1-2011/146557

## Beschreibung

Die vorliegende Erfindung betrifft die Verwendung von bestimmten Metall-Carbenkomplexen zur Aktivierung von Persauerstoffverbindungen, insbesondere zum Bleichen von Farbanschmutzungen beim Waschen von Textilien, sowie Wasch-, Reinigungs- und Desinfektionsmittel, die derartige Carbenkomplexe enthalten.

Anorganische Persauerstoffverbindungen, insbesondere Wasserstoffperoxid und feste Persauerstoffverbindungen, die sich in Wasser unter Freisetzung von Wasserstoffperoxid lösen, wie Natriumperborat und Natriumcarbonat-Perhydrat, werden seit langem als Oxidationsmittel zu Desinfektions- und Bleichzwecken verwendet. Die Oxidationswirkung dieser Substanzen hängt in verdünnten Lösungen stark von der Temperatur ab; so erzielt man beispielsweise mit H₂O₂ oder Alkaliperborat in alkalischen Bleichflotten erst bei Temperaturen oberhalb von etwa 80 °C eine ausreichend schnelle Bleiche verschmutzter Textilien. Bei niedrigeren Temperaturen kann die Oxidationswirkung der anorganischen Persauerstoffverbindungen durch Zusatz sogenannter Bleichaktivatoren verbessert werden, die in der Lage sind, unter den angesprochenen Perhydrolysebedingungen Peroxocarbonsäuren zu liefern und für die zahlreiche Vorschläge, vor allem aus den Stoffklassen der N- oder O-Acylverbindungen, beispielsweise mehrfach acylierte Alkylendiamine, insbesondere Tetraacetylethylendiamin, acylierte Glykolurile, insbesondere Tetraacetylglykoluril, N-acylierte Hydantoine, Hydrazide, Triazole, Hydrotriazine, Urazole, Diketopiperazine, Sulfurylamide und Cyanurate, außerdem Carbonsäureanhydride, insbesondere Phthalsäureanhydrid und Alkylbernsteinsäureanhydride, Carbonsäureester, insbesondere Natriumnonanoyloxy-benzolsulfonat, Natrium-isononanoyloxy-benzolsulfonat, O-acylierte Zuckerderivate, wie Pentaacetylglukose, und N-acylierte Lactame, wie N-Benzoylcaprolactam, in der Literatur bekannt geworden sind. Durch Zusatz dieser Substanzen kann die Bleichwirkung wäßriger Peroxidflotten so weit gesteigert werden, daß bereits bei Temperaturen um 60 °C im Wesentlichen die gleichen Wirkungen wie mit der Peroxidflotte allein bei 95 °C eintreten.

Im Bemühen um energiesparende Wasch- und Bleichverfahren gewinnen in den letzten Jahren Anwendungstemperaturen deutlich unterhalb 60 °C, insbesondere unterhalb 45 °C bis herunter zur Kaltwassertemperatur an Bedeutung.

Bei niedrigen Temperaturen läßt die Wirkung der bisher bekannten Aktivatorverbindungen in der Regel erkennbar nach.

Aus der internationalen Patentanmeldung WO 2009/140259 A1 sind Bleichmittel bekannt, die Persauerstoffverbindung und Metallkomplexe mit Carbenliganden enthalten. Unter den Liganden sind auch Triscarbene vom Aminoalkyl-imidazol-2-yliden-Typ,

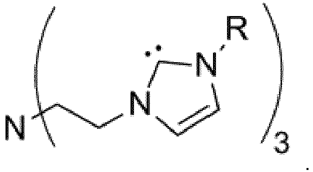

Die vorliegende Erfindung hat die Verbesserung der Oxidations- und Bleichwirkung anorganischer Persauerstoffverbindungen, insbesondere bei niedrigen Temperaturen im Bereich von ca. 10 °C bis 45 °C, zum Ziel.

Gegenstand der Erfindung ist die Verwendung eines Bleichkatalysators in Form eines Komplexes eines Metalls, ausgewählt aus Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt und Zn, mit einem oder mehreren Liganden der allgemeinen Formel (I), 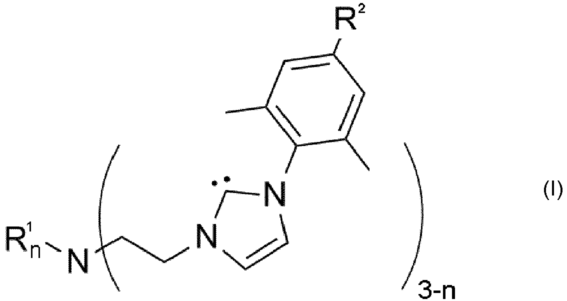 wobei
n für 1 oder 2 steht,
R¹ für einen Rest der allgemeinen Formeln (II) oder (III) steht, 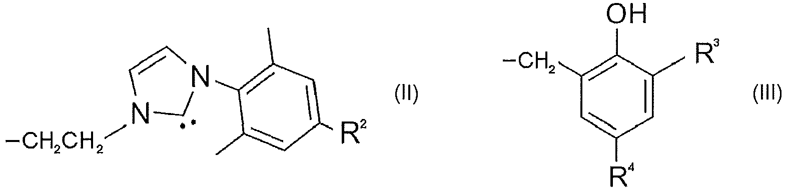
R² für Wasserstoff, OH, eine Alkyl-, Aryl-, Arylalkyl- oder Alylkarylgruppe, die auch ein- oder mehrfach mit OH und/oder F substituiert sein kann, vorzugsweise eine Alkylgruppe mit 1 bis 4 C-Atomen, eine Benzylgruppe, und insbesondere eine Methylgruppe, eine Trifluromethylgruppe oder eine tert-Butylgruppe steht, und
R³ und R⁴ unabhängig voneinander für Wasserstoff, eine Alkylgruppe mit 1 bis 22 C-Atomen, eine gegebenenfalls verbrückte Cycloalkylgruppe mit 5 bis 22 C-Atomen oder eine Alkylarylgruppe mit 7 bis 12 C-Atomen stehen, mit der Maßgabe, dass R³ ein Adamantylrest oder ein tert-Butylrest und/oder R⁴ ein Methylrest oder ein tert-Butylrest ist, als Aktivator für insbesondere anorganische Persauerstoffverbindungen in Oxidations-, Wasch-, Reinigungs- oder Desinfektionslösungen.

Zu den bevorzugten Komplexen gehören solche, bei denen im Liganden der allgemeinen Formel (I) R¹ ein Rest der allgemeinen Formel (III) ist, in dem R³ ein Adamantylrest oder ein tert-Butylrest und R⁴ ein Methylrest oder ein tert-Butylrest ist.

Ein bleichkatalysierender Komplex, der einen Liganden gemäß Formel (I) aufweist, kann den entsprechenden Liganden einmal oder auch mehrfach, insbesondere zweimal, aufweisen. Er kann ein- oder gegebenenfalls zwei- oder mehrkerning sein, wobei die zwei- oder mehrkernigen Komplexe das gleiche Metall oder verschiedene Metalle als Zentralatome enthalten können. Der Komplex kann außerdem zusätzliche Neutral-, Anion- oder Kationliganden, wie beispielsweise H₂O, NH₃, CH₃OH, Acetylaceton, Terpyridin, organische Anionen, wie beispielsweise Citrat, Oxalat, Tartrat, Formiat, ein C₂₋₁₈-Carboxylat, ein C₁₋₁₈-Alkylsulfat, insbesondere Methosulfat, oder ein entsprechendes Alkansulfonat, anorganische Anionen, wie beispielsweise Halogenid, insbesondere Chlorid, Perchlorat, Tetrafluoroborat, Hexafluorophosphat, Nitrat, Hydrogensulfat, Hydroxid oder Hydroperoxid, aufweisen. Er kann auch verbrückende Liganden, wie beispielsweise Alkylendiamine, aufweisen.

Das Zentralatom des Komplexes wird vorzugsweise aus Mn und Fe und deren Mischungen ausgewählt.

Zu den bevorzugten Liganden der allgemeinen Formel (I) gehören 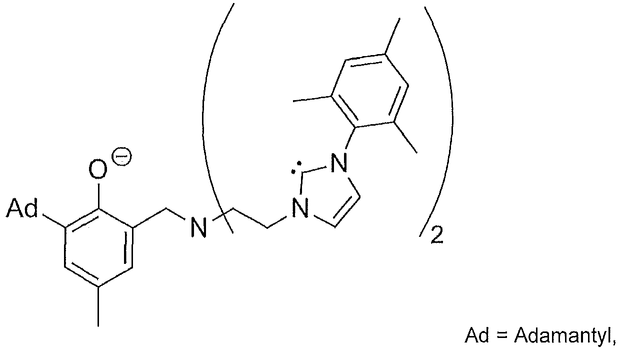 und

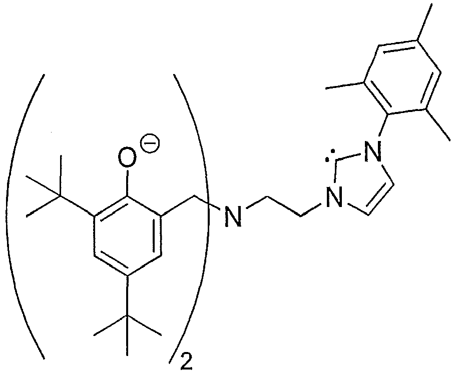

Falls die Anwesenheit des Liganden gemäß allgemeiner Formel (I) und der gegebenenfalls zusätzlichen Liganden nicht zur Ladungsneutralität des Komplexes führt, kann diese durch die Anwesenheit von Gegenanionen, wie beispielsweise Halogenid, Sulfat, Methosulfat, Hexafluorophosphat und/oder Tetrafluoroborat, oder Gegenkationen, wie beispielsweise Ammonium und/oder Tetraalkylammonium, erreicht werden.

Ein weiterer Gegenstand der Erfindung ist die Verwendung der genannten Komplexe zur Verstärkung der Reinigungsleistung von Wasch- und Reinigungsmitteln in wäßriger, insbesondere tensidhaltige Flotte.

Im Rahmen einer erfindungsgemäßen Verwendung kann der genannte Komplex im Sinne eines Aktivators überall dort eingesetzt werden, wo es auf eine besondere Steigerung der Oxidationswirkung der Persauerstoffverbindungen bei niedrigen Temperaturen ankommt, beispielsweise bei der Bleiche von Textilien oder Haaren, bei der Oxidation organischer oder anorganischer Zwischenprodukte, bei der Herstellung von Zellstoff und bei der Desinfektion.

Die erfindungsgemäße Verwendung besteht im wesentlichen darin, Bedingungen zu schaffen, unter denen die Persauerstoffverbindung und der Komplex mit dem Liganden gemäß allgemeiner Formel (I) miteinander reagieren können, mit dem Ziel, stärker oxidierend wirkende Folgeprodukte zu erhalten. Solche Bedingungen liegen insbesondere dann vor, wenn die Reaktionspartner in einem wäßrigen System aufeinandertreffen. Dies kann durch separate Zugabe der Persauerstoffverbindung und der bleichverstärkenden Verbindung zu einer gegebenenfalls wasch- oder reinigungsmittelhaltigen Flotte geschehen. Besonders vorteilhaft wird es jedoch unter Verwendung eines Wasch-, Reinigungs- oder Desinfektionsmittels, welches den genannten bleichverstärkenden Komplex und gegebenenfalls ein peroxidisches Oxidationsmittel enthält, durchgeführt. Die Persauerstoffverbindung kann auch separat, in Substanz oder als vorzugsweise wäßrige Lösung oder Suspension, zum wäßrigen System zugegeben werden, wenn ein persauerstoffverbindungsfreies Mittel verwendet wird. Je nach Verwendungszweck können die Bedingungen weit variiert werden. So kommen neben rein wäßrigen Lösungen auch Mischungen aus Wasser und geeigneten organischen Lösungsmitteln als Reaktionsmedium in Frage. Die Einsatzmengen an Persauerstoffverbindungen werden im allgemeinen so gewählt, daß in der Flotte zwischen 10 ppm und 10 % Aktivsauerstoff, vorzugsweise zwischen 50 und 5000 ppm Aktivsauerstoff vorhanden sind. Vorzugsweise beträgt die Konzentration des Komplexes mit dem Liganden gemäß allgemeiner Formel (I) in der Flotte 0,05 µmol/l bis 200 µmol/l, insbesondere 0,1 µmol/l bis 20 µmol/l.

Eine Kombination aus Persauerstoffverbindung und Komplex mit dem Liganden gemäß allgemeiner Formel (I) wird vorzugsweise zum Bleichen von Farbanschmutzungen beim Waschen von Textilien, insbesondere in wäßriger, tensidhaltiger Flotte, verwendet. Die Formulierung "Bleichen von Farbanschmutzungen" ist dabei in ihrer weitesten Bedeutung zu verstehen und umfaßt sowohl das Bleichen von sich auf dem Textil befindendem Schmutz, das Bleichen von in der Waschflotte befindlichem, vom Textil abgelösten Schmutz als auch das oxidative Zerstören von sich in der Waschflotte befindenden Textilfarben, die sich unter den Waschbedingungen von Textilien ablösen, bevor sie auf andersfarbige Textilien aufziehen können.

Eine weitere bevorzugte Anwendungsform gemäß der Erfindung ist die Verwendung einer Kombination aus Persauerstoffverbindung und Komplex mit dem Liganden gemäß allgemeiner Formel (I) in Reinigungslösungen für harte Oberflächen, insbesondere für Geschirr, zum Bleichen von gefärbten Anschmutzungen, zum Beispiel Tee. Auch dabei wird unter dem Begriff der Bleiche sowohl das Bleichen von sich auf der harten Oberfläche befindendem Schmutz, insbesondere Tee, als auch das Bleichen von in der Geschirrspülflotte befindlichem, von der harten Oberfläche abgelösten Schmutz verstanden.

Die erfindungsgemäßen Verwendungen zur Verstärkung der Reinigungsleistung von Wasch- und Reinigungsmitteln und zum Bleichen von gefärbten Anschmutzungen können besonders einfach dadurch realisiert werden, dass man den Komplex mit dem Liganden gemäß allgemeiner Formel (I) in eine vorzugsweise tensidhaltige wäßrige Flotte einbringt, die auch Persauerstoffverbindung und das zu reinigende Textil oder den zu reinigenden Gegenstand mit harter Oberfläche enthält, wobei die Reihenfolge des Einbringens von Komplex, Persauerstoffverbindung und Textil oder Gegenstand mit harter Oberfläche beliebig ist, oder eine vorzugsweise tensidhaltige wäßrige Flotte, welche den Komplex und Persauerstoffverbindung enthält, auf das zu reinigende Textil oder die zu reinigende harte Oberfläche aufbringt. Vorzugsweise wird der Komplex mit dem Liganden gemäß allgemeiner Formel (I) als Bestandteil eines Wasch-, Reinigungs- oder Desinfektionsmittels eingesetzt, das besonders bevorzugt auch die Persauerstoffverbindung enthält.

Weitere Gegenstände der Erfindung sind daher Wasch-, Reinigungs- und Desinfektionsmittel, die einen oben definierten Komplex mit dem Liganden gemäß allgemeiner Formel (I) enthalten. In erfindungsgemäßen Mitteln sind vorzugsweise 0,001 Gew.-% bis 1,5 Gew.-%, insbesondere 0,1 Gew.-% bis 1 Gew.-% an genanntem Komplex enthalten.

Die erfindungsgemäßen Wasch-, Reinigungs- und Desinfektionsmittel, die als insbesondere pulverförmige Feststoffe, in nachverdichteter Teilchenform, als homogene Lösungen oder als Suspensionen beziehungsweise Dispersionen vorliegen können, können außer der erfindungsgemäß verwendeten bleichverstärkenden Verbindung und vorzugsweise Persauerstoffverbindung im Prinzip alle bekannten und in derartigen Mitteln üblichen Inhaltsstoffe enthalten. Die erfindungsgemäßen Wasch- und Reinigungsmittel können insbesondere Buildersubstanzen, oberflächenaktive Tenside, wassermischbare organische Lösungsmittel, Enzyme, Sequestrierungsmittel, Elektrolyte, pH-Regulatoren und weitere Hilfsstoffe, wie optische Aufheller, Vergrauungsinhibitoren, Farbübertragungsinhibitoren, Schaumregulatoren, zusätzliche Persauerstoff-Aktivatoren sowie Farb- und Duftstoffe enthalten.

Ein erfindungsgemäßes Desinfektionsmittel kann zur Verstärkung der Desinfektionswirkung gegenüber speziellen Keimen zusätzlich zu den bisher genannten Inhaltsstoffen übliche antimikrobielle Wirkstoffe enthalten. Derartige antimikrobielle Zusatzstoffe sind in den erfindungsgemäßen Desinfektionsmitteln vorzugsweise nicht über 10 Gew.-%, besonders bevorzugt von 0,1 Gew.-% bis 5 Gew.-%, enthalten.

Als geeignete organische oder anorganische Persauerstoffverbindungen kommen organische Persäuren beziehungsweise persaure Salze organischer Säuren, wie Phthalimidopercapronsäure, Perbenzoesäure oder Salze der Diperdodecandisäure, insbesondere abe anorganische Persauerstoffverbindungen wie Wasserstoffperoxid und unter den Reinigungsbedingungen Wasserstoffperoxid abgebende anorganische Salze, wie Perborat, Percarbonat und/oder Persilikat, und Wasserstoffperoxid-Einschlußverbindungen, wie H₂O₂-Harnstoffaddukte, in Betracht. Wasserstoffperoxid kann dabei auch mit Hilfe eines enzymatischen Systems, das heißt einer Oxidase und ihres Substrats, erzeugt werden. Sofern feste Persauerstoffverbindungen eingesetzt werden sollen, können diese in Form von Pulvern oder Granulaten verwendet werden, die auch in im Prinzip bekannter Weise umhüllt sein können. Die Persauerstoffverbindungen können als solche oder in Form diese enthaltender Mittel, die prinzipiell alle üblichen Wasch-, Reinigungs- oder Desinfektionsmittelbestandteile enthalten können, zu der Wasch- beziehungsweise Reinigungslauge zugegeben werden. Besonders bevorzugt wird Alkalipercarbonat, Alkaliperborat-Monohydrat oder Wasserstoffperoxid in Form wäßriger Lösungen, die 3 Gew.-% bis 10 Gew.-% Wasserstoffperoxid enthalten, eingesetzt. Falls ein erfindungsgemäßes Wasch- oder Reinigungsmittel Persauerstoffverbindungen enthält, sind diese vorzugsweise in Mengen von 0,1 Gew.-% bis 50 Gew.-%, insbesondere von 5 Gew.-% bis 20 Gew.-% und besonders bevorzugt von 7 Gew.-% bis 17 Gew.-% und äußerst bevorzugt 8 Gew.-% bis 15 Gew.-% vorhanden, während in erfindungsgemäßen Desinfektionsmitteln vorzugsweise von 0,5 Gew.-% bis 40 Gew.-%, insbesondere von 5 Gew.-% bis 20 Gew.-%, an Persauerstoffverbindungen enthalten sind.

Gewünschenfalls können im Rahmen der Erfindung zusätzlich zu dem Komplex mit dem Liganden gemäß allgemeiner Formel (I) auch unter Perhydrolysebedingungen Peroxocarbonsäure-liefernde Verbindungen eingesetzt werden, obwohl die bleichverbessernde Wirkung des Komplexes auch in deren Abwesenheit auftritt. Als unter Perhydrolysebedingungen Peroxocarbonsäure-liefernde Verbindung können insbesondere Verbindungen, die unter Perhydrolysebedingungen gegebenenfalls substituierte Perbenzoesäure und/oder aliphatische Peroxocarbonsäuren mit 1 bis 12 C-Atomen, insbesondere 2 bis 4 C-Atomen ergeben, allein oder in Mischungen, eingesetzt werden. Geeignet sind die eingangs zitierten Bleichaktivatoren, die O- und/oder N-Acylgruppen insbesondere der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Glykolurile, insbesondere Tetraacetylglykoluril (TAGU), acylierte Triazinderivate, insbesondere 1,5-Diacetyl-2,4-dioxohexahydro-1,3,5-triazin (DADHT), N-Acylimide, insbesondere N-Nonanoylsuccinimid (NOSI), acylierte Phenolsulfonate oder -carboxylate beziehungsweise die Sulfon- oder Carbonsäuren von diesen, insbesondere Nonanoyl- oder Isononanoyl- oder Lauroyloxybenzolsulfonat (NOBS beziehungsweise iso-NOBS beziehungsweise LOBS), 4-(2-Decanoyloxyethoxycarbonyloxy)-benzolsulfonat (DECOBS) oder Decanoyloxybenzoat (DOBA), acylierte mehrwertige Alkohole, insbesondere Triacetin, Ethylenglykoldiacetat und 2,5-Diacetoxy-2,5-dihydrofuran sowie acetyliertes Sorbitol und Mannitol und deren Mischungen (SORMAN), acylierte Zuckerderivate, insbesondere Pentaacetylglukose (PAG), Pentaacetylfruktose, Tetraacetylxylose und Octaacetyllactose, acetyliertes, gegebenenfalls N-alkyliertes Glucamin und Gluconolacton, und/oder N-acylierte Lactame, beispielsweise N-Benzoylcaprolactam. Ein erfindungsgemäßes Wasch-, Reinigungs- oder Desinfektionsmittel enthält vorzugsweise bis zu 10 Gew.-%, insbesondere 1 Gew.-% bis 8 Gew.-% unter Perhydrolysebedingungen Peroxocarbonsäure-liefernder Verbindung, und ist einer weiteren bevorzugten Ausführungsform frei von solchen Verbindungen.

Zusätzlich zu den Verbindungen, die unter Perhydrolysebedingungen Peroxocarbonsäuren bilden, oder an deren Stelle können weitere bleichaktivierende Verbindungen, wie beispielsweise Nitrile, aus denen sich Perimidsäuren bilden, vorhanden sein. Dazu gehören insbesondere Aminoacetonitrilderivate mit quaterniertem Stickstoffatom gemäß der Formel 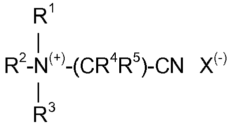 in der R¹ für -H, -CH₃, einen C₂₋₂₄-Alkyl- oder -Alkenylrest, einen substituierten C₁₋₁₄-Alkyl- oder C₂₋₂₄-Alkenylrest mit mindestens einem Substituenten aus der Gruppe -Cl, -Br,
-OH, -NH₂, -CN und -N⁽⁺⁾-CH₂-CN, einen Alkyl- oder Alkenylarylrest mit einer C₁₋₂₄-Alkylgruppe, oder für einen substituierten Alkyl- oder Alkenylarylrest mit mindestens einer, vorzugsweise zwei, gegebenenfalls substituierten C₁₋₂₄-Alkylgruppe(n) und gegebenenfalls weiteren Substituenten am aromatischen Ring steht, R² und R³ unabhängig voneinander ausgewählt sind aus -CH₂-CN, -CH₃, -CH₂-CH₃, -CH₂-CH₂-CH₃, -CH(CH₃)-CH₃,-CH₂-OH, -CH₂-CH₂-OH, -CH(OH)-CH₃, -CH₂-CH₂-CH₂-OH, -CH₂-CH(OH)-CH₃, -CH(OH)-CH₂-CH₃, -(CH₂CH₂-O)ₙH mit n = 1, 2, 3, 4, 5 oder 6, R⁴ und R⁵ unabhängig voneinander eine voranstehend für R¹, R² oder R³ angegebene Bedeutung haben, wobei mindestens 2 der genannten Reste, insbesondere R² und R³, auch unter Einschluß des Stickstoffatoms und gegebenenfalls weiterer Heteroatome ringschließend miteinander verknüpft sein können und dann vorzugsweise einen Morpholino-Ring ausbilden, und X ein ladungsausgleichendes Anion, vorzugsweise ausgewählt aus Benzolsulfonat, Toluolsulfonat, Cumolsulfonat, den C₉₋₁₅-Alkylbenzolsulfonaten, den C₁₋₂₀-Alkylsulfaten, den C₈₋₂₂-Carbonsäure-methylestersulfonaten, Sulfat, Hydrogensulfat und deren Gemischen, ist, können eingesetzt werden.

Auch sauerstoffübertragende Sulfonimine und/oder Acylhydrazone können eingesetzt werden. Auch die Anwesenheit von weiteren bleichkatalysierenden Übergangsmetallkomplexen ist möglich. Diese werden vorzugsweise unter den Cobalt-, Eisen-, Kupfer-, Titan-, Vanadium-, Mangan- und Rutheniumkomplexen ausgewählt. Als Liganden in den Übergangsmetallkomplexen kommen sowohl anorganische als auch organische Verbindungen in Frage, zu denen neben Carboxylaten insbesondere Verbindungen mit primären, sekundären und/oder tertiären Amin- und/oder Alkohol-Funktionen, wie Pyridin, Pyridazin, Pyrimidin, Pyrazin, Imidazol, Pyrazol, Triazol, 2,2'-Bispyridylamin, Tris-(2-pyridylmethyl)amin, 1,4,7-Triazacyclononan, 1,4,7-Trimethyl-1,4,7-triazacyclononan, 1,5,9-Trimethyl-1,5,9-triazacyclododecan, (Bis-((1-methylimidazol-2-yl)-methyl))-(2-pyridylmethyl)-amin, N,N'-(Bis-(1-methylimidazol-2-yl)-methyl)-ethylendiamin, N-Bis-(2-benzimidazolylmethyl)-aminoethanol, 2,6-Bis-(bis-(2-benzimidazolylmethyl)aminomethyl)-4-methylphenol, N,N,N',N'-Tetrakis-(2-benzimidazolylmethyl)-2-hydroxy-1,3-diaminopropan, 2,6-Bis-(bis-(2-pyridylmethyl)aminomethyl)-4-methylphenol, 1,3-Bis-(bis-(2-benzimidazolylmethyl)aminomethyl)-benzol, Sorbitol, Mannitol, Erythritol, Adonitol, Inositol, Lactose, und gegebenenfalls substituierte Salene, Porphine und Porphyrine gehören. Zu den anorganischen Neutralliganden gehören insbesondere Ammoniak und Wasser. Falls nicht sämtliche Koordinationsstellen des Übergangsmetallzentralatoms durch Neutralliganden besetzt sind, enthält der Komplex weitere, vorzugsweise anionische und unter diesen insbesondere ein- oder zweizähnige Liganden. Zu diesen gehören insbesondere die Halogenide wie Fluorid, Chlorid, Bromid und Iodid, und die (NO₂)⁻-Gruppe, das heißt ein Nitro-Ligand oder ein Nitrito-Ligand. Die (NO₂)⁻-Gruppe kann an ein Übergangsmetall auch chelatbildend gebunden sein oder sie kann zwei Übergangsmetallatome asymmetrisch oder η¹-O-verbrücken. Außer den genannten Liganden können die im Aktivatorsystem gemäß der Erfindung zu verwendenden Übergangsmetallkomplexe noch weitere, in der Regel einfacher aufgebaute Liganden, insbesondere ein- oder mehrwertige Anionliganden, tragen. In Frage kommen beispielsweise Nitrat, Actetat, Trifluoracetat, Formiat, Carbonat, Citrat, Perchlorat sowie komplexe Anionen wie Hexafluorophosphat. Die Anionliganden sollen für den Ladungsausgleich zwischen Übergangsmetall-Zentralatom und dem Ligandensystem sorgen. Auch die Anwesenheit von Oxo-Liganden, Peroxo-Liganden und Imino-Liganden ist möglich. Insbesondere derartige Liganden können auch verbrückend wirken, so daß mehrkernige Komplexe entstehen. Im Falle verbrückter, zweikerniger Komplexe müssen nicht beide Metallatome im Komplex gleich sein. Auch der Einsatz zweikerniger Komplexe, in denen die beiden Übergangsmetallzentralatome unterschiedliche Oxidationszahlen aufweisen, ist möglich. Falls Anionliganden fehlen oder die Anwesenheit von Anionliganden nicht zum Ladungsausgleich im Komplex führt, sind in den gemäß der Erfindung zu verwendenden Übergangsmetallkomplex-Verbindungen anionische Gegenionen anwesend, die den kationischen Übergangsmetall-Komplex neutralisieren. Zu diesen anionischen Gegenionen gehören insbesondere Nitrat, Hydroxid, Hexafluorophosphat, Sulfat, Chlorat, Perchlorat, die Halogenide wie Chlorid oder die Anionen von Carbonsäuren wie Formiat, Acetat, Benzoat, Citrat oder Oxalat. Beispiele für solche zusätzlichen Übergangsmetallkomplex-Verbindungen sind Mn(IV)₂(µ-O)₃(1,4,7-trimethyl-1,4,7-triazacyclononan)-di-hexafluorophosphat, [N,N'-Bis[(2-hydroxy-5-vinylphenyl)-methylen]-1,2-diaminocyclohexan]-mangan-(III)-chlorid, [N,N'-Bis[(2-hydroxy-5-nitrophenyl)-methylen]-1,2-diaminocyclohexan]-mangan-(III)-acetat, [N,N'-Bis[(2-hydroxyphenyl)-methylen]-1,2-phenylendiamin]-mangan-(III)-acetat, [N,N'-Bis[(2-hydroxyphenyl)-methylen]-1,2-diaminocyclohexan]-mangan-(III)-chlorid, [N,N'-Bis[(2-hydroxyphenyl)-methylen]-1,2-diaminoethan]-mangan-(III)-chlorid, [N,N'-Bis[(2-hydroxy-5-sulfonatophenyl)-methylen]-1,2-diaminoethan]-mangan-(III)-chlorid, Mangan-Oxalat, Nitropentammin-cobalt(III)-chlorid, Nitritopentammin-cobalt(III)-chlorid, Hexammincobalt(III)-chlorid, Chloropentammin-cobalt(III)-chlorid sowie der Peroxo-Komplex [(NH₃)₅Co-O-O-Co(NH₃)₅]Cl₄.

Die erfindungsgemäßen Mittel können ein oder mehrere Tenside enthalten, wobei insbesondere anionische Tenside, nichtionische Tenside und deren Gemische in Frage kommen. Geeignete nichtionische Tenside sind insbesondere Alkylglykoside und Ethoxylierungs- und/oder Propoxylierungsprodukte von Alkylglykosiden oder linearen oder verzweigten Alkoholen mit jeweils 12 bis 18 C-Atomen im Alkylteil und 3 bis 20, vorzugsweise 4 bis 10 Alkylethergruppen. Weiterhin sind entsprechende Ethoxylierungs- und/oder Propoxylierungsprodukte von N-Alkyl-aminen, vicinalen Diolen, Fettsäureestern und Fettsäureamiden, die hinsichtlich des Alkylteils den genannten langkettigen Alkoholderivaten entsprechen, sowie von Alkylphenolen mit 5 bis 12 C-Atomen im Alkylrest brauchbar.

Geeignete anionische Tenside sind insbesondere Seifen und solche, die Sulfat- oder SulfonatGruppen mit bevorzugt Alkaliionen als Kationen enthalten. Verwendbare Seifen sind bevorzugt die Alkalisalze der gesättigten oder ungesättigten Fettsäuren mit 12 bis 18 C-Atomen. Derartige Fettsäuren können auch in nicht vollständig neutralisierter Form eingesetzt werden. Zu den brauchbaren Tensiden des Sulfat-Typs gehören die Salze der Schwefelsäurehalbester von Fettalkoholen mit 12 bis 18 C-Atomen und die Sulfatierungsprodukte der genannten nichtionischen Tenside mit niedrigem Ethoxylierungsgrad. Zu den verwendbaren Tensiden vom Sulfonat-Typ gehören lineare Alkylbenzolsulfonate mit 9 bis 14 C-Atomen im Alkylteil, Alkansulfonate mit 12 bis 18 C-Atomen, sowie Olefinsulfonate mit 12 bis 18 C-Atomen, die bei der Umsetzung entsprechender Monoolefine mit Schwefeltrioxid entstehen, sowie alpha-Sulfofettsäureester, die bei der Sulfonierung von Fettsäuremethyl- oder -ethylestern entstehen.

Derartige Tenside sind in den erfindungsgemäßen Reinigungs- oder Waschmitteln in Mengenanteilen von vorzugsweise 5 Gew.-% bis 50 Gew.-%, insbesondere von 8 Gew.-% bis 30 Gew.-%, enthalten, während die erfindungsgemäßen Desinfektionsmittel wie auch erfindungsgemäße Mittel zur Reinigung von Geschirr vorzugsweise 0,1 Gew.-% bis 20 Gew.-%, insbesondere 0,2 Gew.-% bis 5 Gew.-% Tenside, enthalten.

Ein erfindungsgemäßes Mittel enthält vorzugsweise mindestens einen wasserlöslichen und/oder wasserunlöslichen, organischen und/oder anorganischen Builder. Zu den wasserlöslichen organischen Buildersubstanzen gehören Polycarbonsäuren, insbesondere Citronensäure, Zuckersäuren und Carboxymethylinuline, monomere und polymere Aminopolycarbonsäuren, insbesondere Glycindiessigsäure, Methylglycindiessigsäure, Nitrilotriessigsäure, Iminodisuccinate wie Ethylendiamin-N,N'-dibernsteinsäure und Hydroxyiminodisuccinate, Ethylendiamintetraessigsäure sowie Polyasparaginsäure, Polyphosphonsäuren, insbesondere Aminotris(methylenphosphonsäure), Ethylendiamintetrakis(methylenphosphonsäure), Lysintetra(methylenphosphosäure) und 1-Hydroxyethan-1,1-diphosphonsäure, polymere Hydroxyverbindungen wie Dextrin sowie polymere (Poly-)carbonsäuren, insbesondere durch Oxidation von Polysacchariden zugängliche Polycarboxylate, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative mittlere Molekülmasse (hier und im Folgenden: Gewichtsmittel) der Homopolymeren ungesättiger Carbonsäuren liegt im allgemeinen zwischen 5 000 g/mol und 200 000 g/mol, die der Copolymeren zwischen 2 000 g/mol und 200 000 g/mol, vorzugsweise 50 000 g/mol bis 120 000 g/mol, jeweils bezogen auf freie Säure. Ein besonders bevorzugtes Acrylsäure-Maleinsäure-Copolymer weist eine relative mittlere Molekülmasse von 50 000 g/mol bis 100 000 g/mol auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei ungesättigte Säuren und/oder deren Salze sowie als drittes Monomer Vinylalkohol und/ oder ein Vinylalkohol-Derivat oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure, insbesondere von (Meth)-acrylsäure ab. Das zweite saure Monomer beziehungsweise dessen Salz kann ein Derivat einer C₄-C₈-Dicarbonsäure sein, wobei Maleinsäure besonders bevorzugt ist. Die dritte monomere Einheit wird in diesem Fall von Vinylalkohol und/oder vorzugsweise einem veresterten Vinylalkohol gebildet. Insbesondere sind Vinylalkohol-Derivate bevorzugt, welche einen Ester aus kurzkettigen Carbonsäuren, beispielsweise von C₁-C₄-Carbonsäuren, mit Vinylalkohol darstellen. Bevorzugte Polymere enthalten dabei 60 Gew.-% bis 95 Gew.-%, insbesondere 70 Gew.-% bis 90 Gew.-% (Meth)acrylsäure bzw. (Meth)acrylat, besonders bevorzugt Acrylsäure bzw. Acrylat, und Maleinsäure bzw. Maleinat sowie 5 Gew.-% bis 40 Gew.-%, vorzugsweise 10 Gew.-% bis 30 Gew.-% Vinylalkohol und/oder Vinylacetat. Ganz besonders bevorzugt sind dabei Polymere, in denen das Gewichtsverhältnis von (Meth)acrylsäure beziehungsweise (Meth)acrylat zu Maleinsäure beziehungsweise Maleinat zwischen 1:1 und 4:1, vorzugsweise zwischen 2:1 und 3:1 und insbesondere 2:1 und 2,5:1 liegt. Dabei sind sowohl die Mengen als auch die Gewichtsverhältnisse auf die Säuren bezogen. Das zweite saure Monomer beziehungsweise dessen Salz kann auch ein Derivat einer Allylsulfonsäure sein, die in 2-Stellung mit einem Alkylrest, vorzugsweise mit einem C₁-C₄-Alkylrest, oder einem aromatischen Rest, der sich vorzugsweise von Benzol oder Benzol-Derivaten ableitet, substituiert ist. Bevorzugte Terpolymere enthalten dabei 40 Gew.-% bis 60 Gew.-%, insbesondere 45 bis 55 Gew.-% (Meth)acrylsäure beziehungsweise (Meth)acrylat, besonders bevorzugt Acrylsäure beziehungsweise Acrylat, 10 Gew.-% bis 30 Gew.-%, vorzugsweise 15 Gew.-% bis 25 Gew.-% Methallylsulfonsäure bzw. Methallylsulfonat und als drittes Monomer 15 Gew.-% bis 40 Gew.-%, vorzugsweise 20 Gew.-% bis 40 Gew.-% eines Kohlenhydrats. Dieses Kohlenhydrat kann dabei beispielsweise ein Mono-, Di-, Oligo- oder Polysaccharid sein, wobei Mono-, Di- oder Oligosaccharide bevorzugt sind. Besonders bevorzugt ist Saccharose. Durch den Einsatz des dritten Monomers werden vermutlich Sollbruchstellen in das Polymer eingebaut, die für die gute biologische Abbaubarkeit des Polymers verantwortlich sind. Diese Terpolymere weisen im Allgemeinen eine relative mittlere Molekülmasse zwischen 1 000 g/mol und 200 000 g/mol, vorzugsweise zwischen 200 g/mol und 50 000 g/mol auf. Weitere bevorzugte Copolymere sind solche, die als Monomere Acrolein und Acrylsäure/Acrylsäuresalze beziehungsweise Vinylacetat aufweisen. Die organischen Buildersubstanzen können, insbesondere zur Herstellung flüssiger Mittel, in Form wäßriger Lösungen, vorzugsweise in Form 30- bis 50-gewichtsprozentiger wäßriger Lösungen eingesetzt werden. Alle genannten Säuren werden in der Regel in Form ihrer wasserlöslichen Salze, insbesondere ihre Alkalisalze, eingesetzt.

Derartige organische Buildersubstanzen können gewünschtenfalls in Mengen bis zu 40 Gew.-%, insbesondere bis zu 25 Gew.-% und vorzugsweise von 1 Gew.-% bis 8 Gew.-% enthalten sein. Mengen nahe der genannten Obergrenze werden vorzugsweise in pastenförmigen oder flüssigen, insbesondere wasserhaltigen, erfindungsgemäßen Mitteln eingesetzt.

Als wasserlösliche anorganische Buildermaterialien kommen insbesondere Polyphosphate, vorzugsweise Natriumtriphosphat, in Betracht. Als wasserunlösliche anorganische Buildermaterialien werden insbesondere kristalline oder amorphe, wasserdispergierbare Alkalialumosilikate, in Mengen nicht über 25 Gew.-%, vorzugsweise von 3 Gew.-% bis 20 Gew.-% und insbesondere in Mengen von 5 Gew.-% bis 15 Gew.-% eingesetzt. Unter diesen sind die kristallinen Natriumalumosilikate in Waschmittelqualität, insbesondere Zeolith A, Zeolith P sowie Zeolith MAP und gegebenenfalls Zeolith X, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm. Ihr Calciumbindevermögen liegt in der Regel im Bereich von 100 bis 200 mg CaO pro Gramm.

Zusätzlich oder alternativ zum genannten wasserunlöslichen Alumosilikat und Alkalicarbonat können weitere wasserlösliche anorganische Buildermaterialien enthalten sein. Zu diesen gehören neben den Polyphosphaten wie Natriumtriphosphat insbesondere die wasserlöslichen kristallinen und/oder amorphen Alkalisilikat-Builder. Derartige wasserlösliche anorganische Buildermaterialien sind in erfindungsgemäßen Mitteln vorzugsweise in Mengen von 1 Gew.-% bis 20 Gew.-%, insbesondere von 5 Gew.-% bis 15 Gew.-% enthalten. Die als Buildermaterialien brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Als kristalline Silikate, die allein oder im Gemisch mit amorphen Silikaten vorliegen können, werden vorzugsweise kristalline Schichtsilikate der allgemeinen Formel Na₂SiₓO_{2x+1 ˙} y H₂O eingesetzt, in der x, das sogenannte Modul, eine Zahl von 1,9 bis 4 und y eine Zahl von 0 bis 20 ist und bevorzugte Werte für x 2, 3 oder 4 sind. Bevorzugte kristalline Schichtsilikate sind solche, bei denen x in der genannten allgemeinen Formel die Werte 2 oder 3 annimmt. Insbesondere sind sowohl β- als auch δ-Natriumdisilikate (Na₂Si₂O_{5 ˙} y H₂O) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können in erfindungsgemäßen Mitteln eingesetzt werden. In einer weiteren bevorzugten Ausführungsform erfindungsgemäßer Mittel wird ein kristallines Natriumschichtsilikat mit einem Modul von 2 bis 3 eingesetzt, wie es aus Sand und Soda hergestellt werden kann. Natriumsilikate mit einem Modul im Bereich von 1,9 bis 3,5 werden in einer weiteren Ausführungsform erfindungsgemäßer Mittel eingesetzt. In einer bevorzugten Ausgestaltung erfindungsgemäßer Mittel setzt man ein granulares Compound aus Alkalisilikat und Alkalicarbonat ein, wie es zum Beispiel unter dem Namen Nabion® 15 im Handel erhältlich ist.

Erfindungsgemäße maschinelle Geschirreinigungsmittel sind vorzugsweise niederalkalisch und enthalten die üblichen Alkaliträger wie zum Beispiel Alkalisilikate, Alkalicarbonate und/oder Alkalihydrogencarbonate. Zu den üblicherweise eingesetzten Alkaliträgern zählen Carbonate, Hydrogencarbonate und Alkalisilikate mit einem Molverhältnis SiO₂/M₂O (M = Alkaliatom) von 1,5 : 1 bis 2,5 : 1. Alkalisilikate können dabei in Mengen von bis zu 30 Gew.-%, bezogen auf das gesamte Mittel, enthalten sein. Auf den Einsatz der hoch alkalischen Metasilikate als Alkaliträger wird vorzugsweise ganz verzichtet. Das in den erfindungsgemäßen Mitteln bevorzugt eingesetzte Alkaliträgersystem ist ein Gemisch aus Carbonat und Hydrogencarbonat, vorzugsweise Natriumcarbonat und -hydrogencarbonat, das in einer Menge von bis zu 60 Gew.-%, vorzugsweise 10 Gew.-% bis 40 Gew.-%, enthalten ist. Je nachdem, welcher pH-Wert letztendlich gewünscht wird, variiert das Verhältnis von eingesetztem Carbonat und eingesetztem Hydrogencarbonat, üblicherweise wird jedoch ein Überschuß an Natriumhydrogencarbonat eingesetzt, so daß das Gewichtsverhältnis zwischen Hydrogencarbonat und Carbonat im allgemeinen 1 : 1 bis 15 : 1 beträgt.

In einer weiteren Ausführungsform erfindungsgemäßer Mittel zur Reinigung von Geschirr sind in diesen 20 Gew.-% bis 40 Gew.-% wasserlöslicher organischer Builder, insbesondere Alkalicitrat, 5 Gew.-% bis 15 Gew.-% Alkalicarbonat und 20 Gew.-% bis 40 Gew.-% Alkalidisilikat enthalten.

Als in den erfindungsgemäßen Mitteln gegebenenfalls enthaltene Enzyme kommen insbesondere solche aus der Klasse der Proteasen, Lipasen, Cutinasen, Amylasen, Pullulanasen, Xylanasen, Hemicellulasen, Cellulasen, Peroxidasen sowie Oxidasen beziehungsweise deren Gemische in Frage, wobei der Einsatz von Protease, Amylase, Lipase und/oder Cellulase besonders bevorzugt ist. Der Anteil beträgt vorzugsweise 0,2 Gew.-% bis 1,5 Gew.-%, insbesondere 0,5 Gew.-% bis 1 Gew.-%. Die Enzyme können in üblicher Weise an Trägerstoffen adsorbiert und/oder in Hüllsubstanzen eingebettet sein oder als konzentrierte, möglichst wasserfreie Flüssigformulierungen eingearbeitet werden.

Geeignete Vergrauungsinhibitoren beziehungsweise soil-release-Wirkstoffe sind Celluloseether, wie Carboxymethylcellulose, Methylcellulose, Hydroxyalkylcellulosen und Cellulosemischether, wie Methylhydroxyethylcellulose, Methylhydroxypropylcellulose und Methyl-Carboxymethylcellulose. Vorzugsweise werden Natrium-Carboxymethylcellulose und deren Gemische mit Methylcellulose eingesetzt. Zu den üblicherweise eingesetzten Soil-release-Wirkstoffen gehören Copolyester, die Dicarbonsäureeinheiten, Alkylenglykoleinheiten und Polyalkylenglykoleinheiten enthalten. Der Anteil an Vergrauungsinhibitoren und/oder soil-release-Wirkstoffen in erfindungsgemäßen Mitteln liegt im allgemeinen nicht über 2 Gew.-% und beträgt vorzugsweise 0,5 Gew.-% bis 1,5 Gew.-%.

Als optische Aufheller für insbesondere Textilien aus Cellulosefasern (zum Beispiel Baumwolle) können beispielsweise Derivate der Diaminostilbendisulfonsäure beziehungsweise deren Alkalimetallsalze enthalten sein. Geeignet sind zum Beispiel Salze der 4,4'-Bis(2-anilino-4-morpholino-1,3,5-triazin-6-yl-amino)-stilben-2,2'-disulfonsäure oder gleichartig aufgebaute Verbindungen, die anstelle der Morpholinogruppe eine Diethanolaminogruppe, eine Methylaminogruppe oder eine 2-Methoxyethylaminogruppe tragen. Weiterhin können Aufheller vom Typ des substituierten 4,4'-Distyryl-diphenyl anwesend sein, zum Beispiel 4,4'-Bis-(4-chlor-3-sulfostyryl)-diphenyl. Auch Gemische von Aufhellern können verwendet werden. Für Polyamidfasern eignen sich besonders gut Aufheller vom Typ der 1,3-Diaryl-2-pyrazoline, beispielsweise 1-(p-Sulfoamoylphenyl)-3-(p-chlorphenyl)-2-pyrazolin sowie gleichartig aufgebaute Verbindungen. Der Gehalt des Mittels an optischen Aufhellern beziehungsweise Aufhellergemischen liegt im allgemeinen nicht über 1 Gew.-%, vorzugsweise 0,05 Gew.-% bis 0,5 Gew.-%. In einer bevorzugten Ausführungsform der Erfindung ist das Mittel frei von derartigen Wirkstoffen.

Zu den in den erfindungsgemäßen Mitteln einsetzbaren üblichen Schaumregulatoren gehören beispielsweise Polysiloxan-Kieselsäure-Gemische, wobei die darin enthaltene feinteilige Kieselsäure vorzugsweise silaniert oder anderweitig hydrophobiert ist. Die Polysiloxane können sowohl aus linearen Verbindungen wie auch aus vernetzten Polysiloxan-Harzen sowie aus deren Gemischen bestehen. Weitere Entschäumer sind Paraffinkohlenwasserstoffe, insbesondere Mikroparaffine und Paraffinwachse, deren Schmelzpunkt oberhalb 40 °C liegt, gesättigte Fettsäuren beziehungsweise Seifen mit insbesondere 20 bis 22 C-Atomen, zum Beispiel Natriumbehenat, und Alkalisalze von Phosphorsäuremono- und/oder -dialkylestern, in denen die Alkylketten jeweils 12 bis 22 C-Atome aufweisen. Unter diesen wird bevorzugt Natriummonoalkylphosphat und/oder -dialkylphosphat mit C₁₆- bis C₁₈-Alkylgruppen eingesetzt. Der Anteil der Schaumregulatoren kann vorzugsweise 0,2 Gew.-% bis 2 Gew.-% betragen.

Zu den in den erfindungsgemäßen Mitteln, insbesondere wenn sie in flüssiger oder pastöser Form vorliegen, verwendbaren organischen Lösungsmitteln gehören Alkohole mit 1 bis 4 C-Atomen, insbesondere Methanol, Ethanol, Isopropanol und tert.-Butanol, Diole mit 2 bis 4 C-Atomen, insbesondere Ethylenglykol und Propylenglykol, sowie deren Gemische und die aus den genannten Verbindungsklassen ableitbaren Ether. Derartige wassermischbare Lösungsmittel sind in erfindungsgemäßen Mitteln in Mengen von vorzugsweise nicht über 20 Gew.-%, insbesondere von 1 Gew.-% bis 15 Gew.-%, vorhanden.

Zur Einstellung eines gewünschten, sich durch die Mischung der übrigen Komponenten nicht von selbst ergebenden pH-Werts können die erfindungsgemäßen Mittel system- und umweltverträgliche Säuren, insbesondere Citronensäure, Essigsäure, Weinsäure, Äpfelsäure, Milchsäure, Glykolsäure, Bernsteinsäure, Glutarsäure und/oder Adipinsäure, aber auch Mineralsäuren, insbesondere Schwefelsäure oder Alkalihydrogensulfate, oder Basen, insbesondere Ammonium- oder Alkalihydroxide, enthalten. Derartige pH-Regulatoren sind in den erfindungsgemäßen Mitteln vorzugsweise nicht über 10 Gew.-%, insbesondere von 0,5 Gew.-% bis 6 Gew.-%, enthalten.

Die Herstellung der erfindungsgemäßen festen Mittel bietet keine Schwierigkeiten und kann in im Prinzip bekannter Weise, zum Beispiel durch Sprühtrocknen oder Granulation, erfolgen, wobei Persauerstoffverbindung und Bleichkatalysator gegebenenfalls später getrennt zugesetzt werden.

Erfindungsgemäße Mittel in Form wäßriger oder sonstige übliche Lösungsmittel enthaltender Lösungen werden besonders vorteilhaft durch einfaches Mischen der Inhaltsstoffe, die in Substanz oder als Lösung in einen automatischen Mischer gegeben werden können, hergestellt.

Die erfindungsgemäßen Mittel liegen vorzugsweise als pulverförmige, granulare oder tablettenförmige Präparate vor, die in an sich bekannter Weise, beispielsweise durch Mischen, Granulieren, Walzenkompaktieren und/oder durch Sprühtrocknung der thermisch belastbaren Komponenten und Zumischen der empfindlicheren Komponenten, zu denen insbesondere Enzyme, Bleichmittel und das bleichaktivierende System zu rechnen sind, hergestellt werden können. Zur Herstellung erfindungsgemäßer Mittel mit erhöhtem Schüttgewicht, insbesondere im Bereich von 650 g/l bis 950 g/l, ist ein einen Extrusionschritt aufweisendes Verfahren bevorzugt.

Zur Herstellung von erfindungsgemäßen Reinigungsmitteln in Tablettenform geht man vorzugsweise derart vor, daß man alle Bestandteile in einem Mischer miteinander vermischt und das Gemisch mittels herkömmlicher Tablettenpressen, beispielsweise Exzenterpressen oder Rundläuferpressen, mit Preßdrucken im Bereich von 200 · 10⁵ Pa bis 1 500 · 10⁵ Pa verpresst. Man erhält so problemlos bruchfeste und dennoch unter Anwendungsbedingungen ausreichend schnell lösliche Tabletten mit Biegefestigkeit von normalerweise über 150 N. Vorzugsweise weist eine derart hergestellte Tablette ein Gewicht von 15 g bis 40 g, insbesondere von 20 g bis 30 g auf, bei einem Durchmesser von 35 mm bis 40 mm.

Die Herstellung erfindungsgemäßer Mittel in Form von nicht staubenden, lagerstabil rieselfähigen Pulvern und/oder Granulaten mit hohen Schüttdichten im Bereich von 800 bis 1000 g/l kann auch dadurch erfolgen, daß man in einer ersten Verfahrensteilstufe die Builder-Komponenten mit wenigstens einem Anteil flüssiger Mischungskomponenten unter Erhöhung der Schüttdichte dieses Vorgemisches vermischt und nachfolgend - gewünschtenfalls nach einer Zwischentrocknung - die weiteren Bestandteile des Mittels, darunter das bleichaktivierende System, mit dem so gewonnenen Vorgemisch vereinigt.

### Beispiele

### Beispiel 1: Herstellung von M2 ([(BIMPN^{Mes,Ad,Me})Fe(Cl)])

### a) 2,2'-(3-Adamantyl-5-methyl-2-hydroxybenzylazadiyl)diethanol,

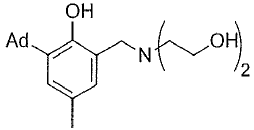

2-Adamantylcresol (22,9 g, 94,5 mmol, 1 eq) und Diethanolamin (13,5 ml, 14,9 g, 142 mmol, 1,5 eq) wurden in Methanol (65 ml) gelöst. Formaldehyd (28,3 ml einer 37%igen wässrigen Lösung, 378 mmol, 4 eq) wurde unter Rühren zugesetzt. Das Reaktionsgemisch wurde über Nacht unter Rückfluß erhitzt. Nach Abkühlen auf Raumtemperatur wurde das ausgefallene cremefarbene Produkt abfiltriert, mit wenig Methanol gewaschen und im Vakkum getrocknet. Ausbeute: 25,2 g (74%) weißes Pulver.
¹H NMR (399.78 MHz, CDCl₃, ppm): δ = 6.94 (s, 1H, Ar-H), 6.66 (s, 1H, Ar-H), 3.80 (2, 2H, Ar-CH₂-N), 3.74 (t, ³*J*_{HH} = 4.8 Hz, 2H, NCH₂C*H*₂OH), 2.77 (t, ³*J*_{HH} = 4.8 Hz, 2H, NC*H₂*CH₂OH), 2.23 (s, 3H, Ar-CH₃), 2.12 (s (br), 6H, Ad-CH₂), 2.04 (s (br), 3H, Ad-CH), 1.76 (m (br), 6H, Ad-CH₂).

| | |
|---|---|
| Elementaranalyse (%) | berechnet: C, 73,50; H, 3,90; N, 9,25. |
| | gefunden: C, 73,63; H, 4,09; N, 9,33. |

### b) ((3-(Adamantan-1-yl)-2-hydroxy-5-methylbenzyl)azadiyl)bis(ethan-2,1-diyl)-bis(4-methylbenzolsulfonat),

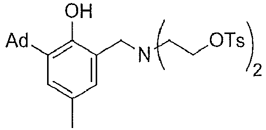

2,2'-(3-Adamantyl-5-methyl-2-hydroxybenzylazadiyl)diethanol (10,0 g, 27,8 mmol, 1 eq) und Pyridin (11,2 ml, 11,0 g, 139 mmol, 5 eq) wurden in wasserfreiem DCM (40 ml) gelöst und auf 0 °C abgekühlt. Unter Rühren wurde eine Lösung von Tosylchlorid (11,1 g, 58,4 mmol, 2,1 eq) in DCM (30 ml) während 3 Stunden zugetropft. Das Reaktionsgemisch wurde bei Raumtemperatur für 1 weitere Stunde gerührt und durch die Zugabe von Wasser (50 ml) gequencht. Die organische Phase wurde mit gesättiger wässriger NH₄Cl-Lösung (60 ml), gesättigter wässriger NaHCO₃-Lösung (60 ml) und wässriger NaCl-Lösung (80 ml) gewaschen, über Na₂SO₄ getrocknet, filtriert und das Lüsungsmittel wurde entfernt. Das erhaltene Rohprodukt (ca. 18 g gelbes Öl) wurde durch Flash-Säulenchromatographie (Elutionsgradient 4:1 auf 3:2 Hexan/Ethylacetat, 600 g basisches Aluminiumoxid (Brockman Aktivität III), die Substanz wurde in DCM gelöst und über 30 g Aluminiumoxid getrocknet) gereinigt. Man erhielt einen weißen Feststoff (5,8 g, 31%).
¹H NMR (399.78 MHz, CDCl₃, ppm): δ = 9.23 (s, 1H, N*H*), 7.78 (d, ³*J*_{HH} = 8.1 Hz, 4H, O₃S-Ar-H), 7.33 (d, ³*J*_{HH} = 8.1 Hz, 4H, O₃S-Ar-H), 6.92 (d, ³*J*_{HH} = 1.5 Hz, 1H, Ad-Ar-H), 6.53 (d, ³*J*_{HH} = 1.5 Hz, 1H, Ad-Ar-H), 4.05 (t, ³*J*_{HH} = 5.5 Hz, 4H, NCH₂C*H*₂O), 3.67 (s, 2H, Ar-CH₂-N), 2.88 (t, ³*J*_{HH} = 5.5 Hz, 4H, NC*H*₂CH₂O), 2.44 (s, 6H, O₃S-Ar-CH₃), 2.21 (s, 3H, Ad-Ar-CH₃), 2.07 (m, 9H, Ad-CH₂ and Ad-CH), 1.77 (m, 6H, Ad-CH₂).
¹³C{¹H} NMR (100.53 MHz, CDCl₃, ppm): δ = 154.0, 145.1, 136.9, 132.5, 129.9, 128.0, 127.7, 127.3, 127.1, 120.9, 66.7, 58.1, 52.0, 40.2, 37.1, 36.6, 29.1, 21.7, 20.7.

### c) [H₃BIMPN^{Mes,Ad,Me}]OTs₂,

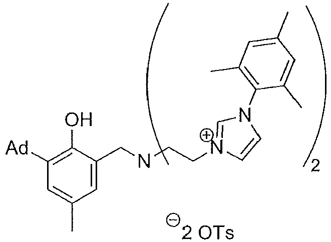

Eine Lösung von ((3-(Adamantan-1-yl)-2-hydroxy-5-methylbenzyl)azadiyl)bis(ethan-2,1-diyl)-bis(4-methylbenzolsulfonat) (5,80 g, 8,68 mmol, 1 eq) und N-Mesitylylimidazol (3,32 g, 17,8 mmol, 2,05 eq) in Acetonitril (30 ml) wurde bei Raumtemperatur für 1 Woche gerührt. Das Lösungsmittel wurde im Vakuum entfernt, der Rückstand in Diethylether aufgenommen, abfiltriert, mehrfach mit Diethylether gewaschen und im Vakuum getrocknet. Man erhielt einen weißen Feststoff (6,97 g, 79%).
¹H NMR (399.78 MHz, CDCl₃, ppm): δ = 9.56 (t, ³*J*_{HH} = 1.6 Hz, 2H, NCHN), 8.57 (s (br), 1H, OH), 8.29 (t, ³*J*_{HH} = 1.6 Hz, 2H, NCHCHN), 7.65 (d, ³*J*_{HH} = 8.0 Hz, 4H, O₃S-Ar-H), 7.03 (d, ³*J*_{HH} = 8.0 Hz, 4H, O₃S-Ar-H), 7.00 (t, ³*J*_{HH} = 1.6 Hz, 2H, NCHCHN), 6.95 (s, 4+1H, Mes-H überlagert Ad-Ar-H), 6.79 (d, ³*J*_{HH} = 1.8 Hz, 1H, Ad-Ar-H), 4.41 (t, ³*J*_{HH} = 6.9 Hz, 4H, NCH₂C*H*₂NHN), 4.07 (s, 2H, Ar-CH₂-N), 3.41 (t, ³*J*_{HH} = 6.9 Hz, 4H, NCH₂C*H*₂NHN), 2.33 (s, 6H, Mes-CH₃), 2.30 (s, 6H, O₃S-Ar-CH₃), 2.22 (s, 3H, Ad-Ar-CH₃), 2.03 (m, 6H, Ad-CH₂), 1.99 (s, 12H, Mes-CH₃), 1.93 (m, 3H, Ad-CH), 1.68 (m, 6H, Ad-CH₂).
¹³C{¹H} NMR (100.53 MHz, CDCl₃, ppm): δ = 153.0, 143.3, 141.0, 139.2, 138.1, 137.0, 134.3, 1301.8, 129.7, 129.0, 128.5, 128.2, 127.5, 125.8, 124.8, 123.4, 122.8, 59.5, 54.7, 48.0, 40.4, 37.0, 36.7, 29.0, 21.3, 21.1, 20.7, 17.4.

### d) Herstellung von A[BIMPN^{Mes,Ad,Me}] (A = Na, K),

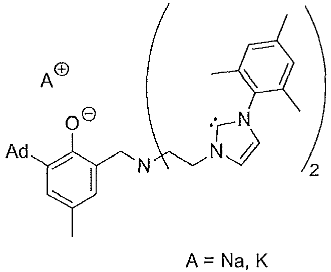

Das in Stufe c) hergestellt Salz wurde in THF gelöst und eine Lösung oder Aufschlämmung von Natriummethanolat oder Kaliumtertiärbutanolat (3.1 eq) wurde hinzugefügt. Nach Rühren für 2 Stunden bei Raumtemperatur wurde das Lösungsmittel im Vakuum entfernt. Der Rückstand wurde mit Diethylether extrahiert; man erhielt den Na- oder K-Komplex als orangenen Feststoff (quant.).

### e) Umsetzung des in Stufe d) erhaltenen Komplexes mit FeCl₂ zu [(BIMPN^{Mes,Ad,Me})Fe(Cl)]Cl

K[BIMPN^{Mes,Ad,Me}] (1 eq) wurde in reichlich Ether gelöst, auf -35 °C gekühlt und zu einer ebenfalls gekühlten Lösung von FeCl₂ (1 eq) in möglichst wenig Pyridin gegeben. Die Mischung wurde über Nacht bei Raumtemperatur gerührt, wobei sich ein cremefarbener Niederschlag bildete. Dieser wurde abfiltriert, mit Ether sorgfältig gewaschen und im Vakuum getrocknet. Das Produkt enthält noch KCl, welches bei der Reaktion mitausfällt. Dieses kann durch wiederholtes Aufnehmen in Dichlormethan, Filtrieren über Celite und Eindampfen entfernt werden.

Das Produkt zeigt ein paramagnetisches NMR-Spektrum, welches schwer zu integrieren ist, und bei dem zahlreiche Peaks derart verbreitert sind dass sie im Untergrundrauschen verschwinden. Dennoch lassen sich folgende charakteristische Peaks zuordnen.
¹H NMR (399.78 MHz, Acetonitril-d₃, ppm): δ = 51.86, 47.24, 40.14, 12.16, 8.65, 3.00, -4.96.

| | |
|---|---|
| Elementaranalyse (%) | berechnet: C, 62,81; H, 6,43; N, 7,96; für 1.25 eq KCl pro Komplexmolekül. |
| | gefunden: C, 62,69; H, 6,44; N, 7,99. |

⁵⁷Fe Mößbauer Parameter (Feststoff, 77 K): *δ* = 0.68(1) mm s⁻¹, d*E*_{Q} = 3.28(1) mm⁻¹, *Γ*_{FWHM} = 0.27(1) mm s⁻¹.

### Beispiel 2: Alternative Syntheseroute zu K[BIMPN^{Mes,Ad,Me}] (Beispiel 1, Stufe d)

### a) Bis(N,N-(1-(2,4,6-trimethylphenyl)-imidazol))iumtrichlorid,

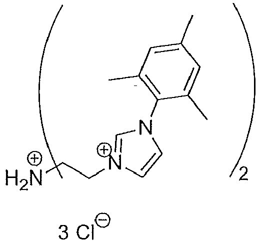

N-Mesitylylimidazol (17,00 g, 91,2 mmol, 2 eq) und Bis-2-(chloroethyl)amin-Hydrochlorid (8,16 g, 45.6 mmol, 1 eq) wurden in Acetonitril (50 ml) gelöst und 48 h unter Rückfluss erhitzt. Anschließend wurde die Reaktionsmischung auf 0 °C abgekühlt und der ausgefallene weiße Feststoff abfiltriert, mit gekühltem Acetonitril und Aceton gewaschen und im Vakuum getrocknet. Ausbeute: 8.94 g (34 %) weißes Pulver.
¹H NMR (399.78 MHz, CDCl₃, ppm): δ = 10.1 (s, 1H, Im-H), 8.64 (t, ³*J*_{HH} = 1.5, Im-H, 1H), 7.13 (t, ³*J*_{HH} = 1.6 Hz, 1H, Im-H), 6.94 (d, 2H, Mes-H), 5.27 (s (br), 2H, Im-*CH*2CH2-N), 4.05 (s (br), 2H, Im-CH2C*H2*-N), 2.31 (s, 3H, Mes-CH3), 2.13 (s, 6H, Mes-CH3).
¹³C{¹H} NMR (100.53 MHz, CDCl₃, ppm): δ = 141.1, 138.4, 134.7, 131.0, 129.9, 125.0, 123.3, 47.69 (Im-CH2CH2-N), 46.49 (Im-CH2CH2-N), 21.19 (Mes-CH3), 18.22 (Mes-CH3).

### b) 2-(Adamant-1-yl)-4-methyl-6-(chlormethyl)phenol,

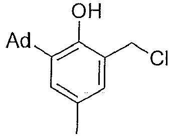

2-Adamantyl-p-cresol (18.8 g, 77.3 mmol, 1 eq) wurde in Toluol (200 ml) gelöst und mit konzentrierter wässriger Salzsäure (30 ml) behandelt. Unter starkem Rühren des Zweiphasengemisches wurde Paraformaldehyd (3.03 g, 100 mmol, 1.3 eq) zugegeben. Die Reaktionsmischung wurde über Nacht gerührt. Die organische Phase wurde abgetrennt, über Na₂SO₄ getrocknet, filtriert und das Lösumngsmittel im Vakuum entfernt. Das Rohprodukt wurde durch Umkristallisieren in Toluol analysenrein gewonnen. Ausbeute: (10.5 g, 47 %) weißer Feststoff.
¹H NMR (399.78 MHz, CDCl₃, ppm): δ = 7.07 (d, ³*J*_{HH} = 2.1, 1H, Ar-H), 6.91 (d, ³*J*_{HH} = 2.0, 1H, Ar-H), 5.36 (s, 1H, OH), 4.66 (s, 2H, Ar-CH2-Cl), 2.28 (s, 3H, Ar-CH3), 2.13 - 2.10 (m (br), 6+3H, Ad-CH, überlagert von Ad-CH2), 1.79 (s, 6H, Ad-CH2).
¹³C{¹H} NMR (100.53 MHz, CDCl₃, ppm): δ = 152.0, 138.0, 129.9, 129.2, 128.2, 123.9, 44.80, 40.89, 37.15, 36.94, 29.14, 20.89.

| | |
|---|---|
| Elementaranalyse (%) | berechnet: C, 74,34; H, 7,97. |
| | gefunden: C, 74,58; H, 8,13. |

### c) (H₃BIMPN^{Mes,Ad,Me}](BPh₄)₂,

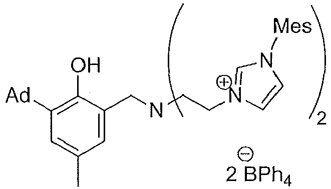

Zu einer Suspension von Bis(N,N-(1-(2,4,6-trimethylphenyl)-imidazol))iumtrichlorid (9.00 g, 14.6 mmol, 1 eq) in Dichlormethan (80 ml) wurde Triethylamin (3.28 g, 4.52 ml, 32.6 mmol, 2.2 eq) gegeben und die entstehende Lösung zum Siedepunkt erhitzt. Eine Lösung von 2-(Adamant-1-yl)-4-methyl-6-(chlormethyl)phenol (5.70 g, 16.3 mmol, 1.1 eq) in Dichlormethan (40 ml) wurde unter Rückfluss innerhalb von 3 h zugetropft und das Reaktionsgemisch über Nacht weiter gerührt. Anschließend wurde filtriert und das Lösemittel am Rotationsverdampfer entfernt. Der Rückstand wurde in Methanol (80 ml) aufgenommen, unter Rückfluss erhitzt und eine Lösung von NaBPh₄ (10.0 g, 29.2 mmol, 2 eq) in Methanol (20 ml) langsam zugetropft. Nach Abkühlen auf Raumtemperatur wurde der ausgefallene weiße Feststoff abfiltriert und mit Methanol gewaschen. Nach dem Trocknen des Rohproduktes wurde Benzol (80 ml) zugegeben und das entstehende Zweiphasengemisch 2 h heftig gerührt. Die überstehende Flüssigkeit wurde abdekantiert und der zähe Rückstand im Vakuum getrocknet. Ausbeute: 9.16 g (47 %) weißer Feststoff.
¹H NMR (399.78 MHz, CDCl₃, ppm): δ = 8.24 (s, 1H, Ad-Ar-OH), 7.21 (m (br), 16H, BPh4-H), 6.87 (m (br), 4+1H, Ad-Ar-H, überlagert von Mes-H), 6.72 (m (br), 16+8H, BPh4-H, überlagert von BPh4-H), 6.48 (s, 1H, Ad-Ar-H), 5.90 (s, 2H, Im-H), 5.69 (s, 2H, Im-H), 5.29 (s, 2H, Im-H), 3.23 (s, 2H, Ad-Ar-CH2-N), 2.78 (s (br), 4H, , Im-CH2CH2-N), 2.27 (s, 6H, Ar-CH3), 2.12 (m (br), 4+3H, Im-CH2CH2-N, überlagert durch Ad-Ar-CH3), 1.99 (s, 12H, Mes-CH3), 1.63 (m (br), 6+6+3H, Ad-CH, überlagert von Ad-CH2 und Ad-CH2).gefunden: C, 74,58; H, 8,13.

| | |
|---|---|
| Elementaranalyse (%) | berechnet: C, 84,48; H, 7,47; N, 5,24; |
| | gefunden: C, 84,53; H, 7,72; N, 5,19. |

### d) Deprotonierung und Komplexierung erfolgte wie in Beispiel 1, Stufen d) und e) beschrieben.

### Beispiel 3: Herstellung von M3 ([(BIMPN^{Mes,Ad,Me})MⁿCl])

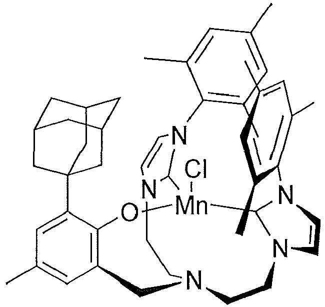

K[BIMPN^{Mes,Ad,Me}] (275 mg, 373 µmol, 1 eq) und MnCl₂ (46.9 mg, 373 µmol, 1 eq) wurden in einer Lösung aus Pyridin (2 ml) und Diethylether (8 ml) über Nacht gerührt. Die Reaktionsmischung wurde filtriert, der Filterkuchen mit Benzol und Diethylether gewaschen, im Vakuum getrocknet und mit THF extrahiert. Der Rückstand wurde für 2 Stunden in Benzol gerührt und die Mischung anschließend filtriert. Der Filterkuchen wurde mit Benzol und Diethylether gewaschen und im Vakuum getrocknet. Ausbeute: 130 mg (47 %) weißes Pulver.

Die Verbindung ist NMR-inaktiv.

IR (KBr pellet): 2899, 2841, 1606, 1468, 1402, 1327, 1238, 1034, 849, 735, 677, 581, 517 cm⁻¹.

Das Produkt wurde in THF umkristallisiert, um es analysenrein zu erhalten. Die folgende Elementaranalyse ist berechnet unter Einbeziehung eines THF-Moleküls pro Komplexmolekül.

| | |
|---|---|
| Elementaranalyse (%) | ([(BIMPN^{Mes,Ad,Me})MnCl]xTHF) |
| | berechnet: C, 70,20; H, 7,31; N, 8,19. |
| | gefunden: C, 69,79; H, 6,91; N, 8,21. |

### Beispiel 4: Bleichversuche

Es wurden miniaturisierte Waschversuche bei den in der nachfolgenden Tabelle angegebenen Temperaturen mit den ebenfalls in der Tabelle angegebenen standardisierten Anschmutzungen auf Baumwolle unter Einsatz eines bleichaktivatorfreien und bleichmittelhaltigen Waschmittels V1 (enthaltend 12,5 Gew.-% Natriumpercarbonat), das zusammen mit jeweils einer der in den Beispielen 1 oder 3 hergestellten Verbindung (Einsatzmenge jeweils 20 µmol/l) in Wasser gegeben wurde. Zum Vergleich wurde eine ansonsten identische Waschlauge angesetzt, die nur das Waschmittel V1 enthielt. Die Auswertung erfolgte über Farbabstandsmessung gemäß der L*a*b* - Werte und der daraus berechneten Y-Werte als Maß für die Helligkeit. Die folgende Tabelle zeigt die dY-Werte, die sich aus der Differenz Y(nach dem Waschen) - Y(vor dem Waschen) ergaben.

| | V1 | V1 + M2 | V1 + M3 |
|---|---|---|---|
| Brombeere, 30 °C | 65,8 | 67,1 | n.b |
| Heidelbeere, 20 °C | 54,4 | n.b. | 55,2 |
| Tee, 30 °C | 54,4 | n.b. | 55,8 |
| Tee, 40 °C | 61,6 | n.b. | 64,2 |

| | | | |
|---|---|---|---|
| n.b.: nicht bestimmt | | | |

Die dY-Werte bei Einsatz der erfindungswesentlichen Verbindung sind größer als diejenigen, die sich beim Einsatz nur des Waschmittels ergeben, was einem höheren Weißgrad und somit einer verbesserten Fleckentfernung entspricht.

## Patentansprüche

1. Verwendung eines Bleichkatalysators in Form eines Komplexes eines Metalls, ausgewählt aus Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt und Zn, mit einem oder mehreren Liganden der allgemeinen Formel (I), 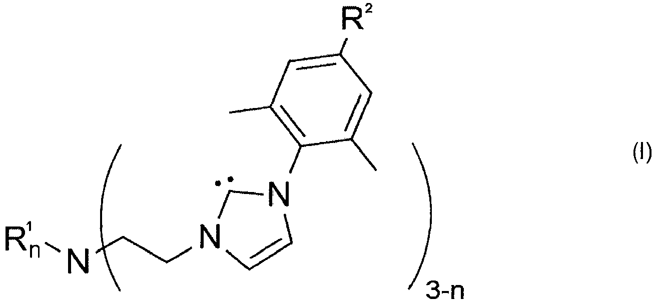 wobei
n für 1 oder 2 steht,
R¹ für einen Rest der allgemeinen Formel (III) steht, 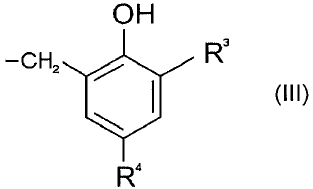
R² für Wasserstoff, OH, eine Alkyl-, Aryl-, Arylalkyl- oder Alkylarylgruppe, die auch ein- oder mehrfach mit OH und/oder F substituiert sein kann, steht, und
R³ und R⁴ unabhängig voneinander für Wasserstoff, eine Alkylgruppe mit 1 bis 22 C-Atomen, eine gegebenenfalls verbrückte Cycloalkylgruppe mit 5 bis 22 C-Atomen oder eine Alkylarylgruppe mit 7 bis 12 C-Atomen stehen, mit der Maßgabe, dass R³ ein Adamantylrest oder ein tert-Butylrest und/oder R⁴ ein Methylrest oder ein tert-Butylrest ist,
als Aktivator für insbesondere anorganische Persauerstoffverbindungen in Oxidations-, Wasch-, Reinigungs- oder Desinfektionslösungen.

2. Verwendung eines Bleichkatalysators in Form eines Komplexes eines Metalls, ausgewählt aus Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt und Zn, mit einem oder mehreren Liganden der allgemeinen Formel (I), 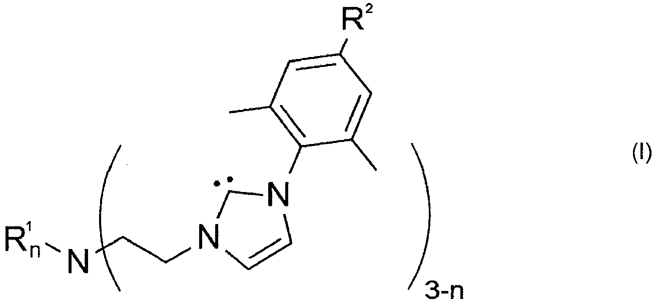 wobei
n für 1 oder 2 steht,
R¹ für einen Rest der allgemeinen Formel (III) steht, 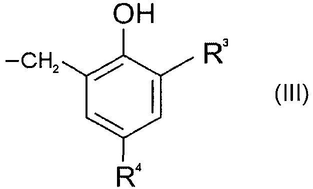
R² für Wasserstoff, OH, eine Alkyl-, Aryl-, Arylalkyl- oder Alkylarylgruppe, die auch ein- oder mehrfach mit OH und/oder F substituiert sein kann, steht, und
R³ und R⁴ unabhängig voneinander für Wasserstoff, eine Alkylgruppe mit 1 bis 22 C-Atomen, eine gegebenenfalls verbrückte Cycloalkylgruppe mit 5 bis 22 C-Atomen oder eine Alkylarylgruppe mit 7 bis 12 C-Atomen stehen, mit der Maßgabe, dass R³ ein Adamantylrest oder ein tert-Butylrest und/oder R⁴ ein Methylrest oder ein tert-Butylrest ist,
zur Verstärkung der Reinigungsleistung von Wasch- und Reinigungsmitteln in wäßriger, insbesondere tensidhaltige Flotte.

3. Verwendung einer Kombination aus Persauerstoffverbindung und eines Bleichkatalysators in Form eines Komplexes eines Metalls, ausgewählt aus Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt und Zn, mit einem oder mehreren Liganden der allgemeinen Formel (I), 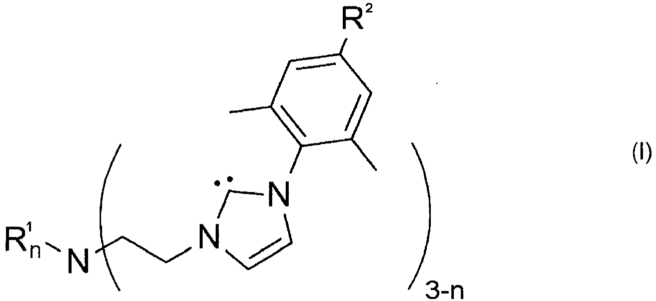 wobei
n für 1 oder 2 steht,
R¹ für einen Rest der allgemeinen Formel (III) steht, 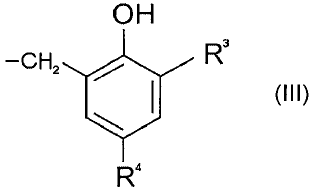
R² für Wasserstoff, OH, eine Alkyl-, Aryl-, Arylalkyl- oder Alkylarylgruppe, die auch ein- oder mehrfach mit OH und/oder F substituiert sein kann, steht, und
R³ und R⁴ unabhängig voneinander für Wasserstoff, eine Alkylgruppe mit 1 bis 22 C-Atomen, eine gegebenenfalls verbrückte Cycloalkylgruppe mit 5 bis 22 C-Atomen oder eine Alkylarylgruppe mit 7 bis 12 C-Atomen stehen, mit der Maßgabe, dass R³ ein Adamantylrest oder ein tert-Butylrest und/oder R⁴ ein Methylrest oder ein tert-Butylrest ist,
zum Bleichen von Farbanschmutzungen beim Waschen von Textilien, insbesondere in wäßriger, tensidhaltiger Flotte, oder in Reinigungslösungen für harte Oberflächen, insbesondere für Geschirr, zum Bleichen von gefärbten Anschmutzungen, insbesondere von Tee.

4. Wasch-, Reinigungs- oder Desinfektionsmittel, **dadurch gekennzeichnet, daß** es einen Bleichkatalysator in Form eines Komplexes eines Metalls, ausgewählt aus Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt und Zn, mit einem oder mehreren Liganden der allgemeinen Formel (I), 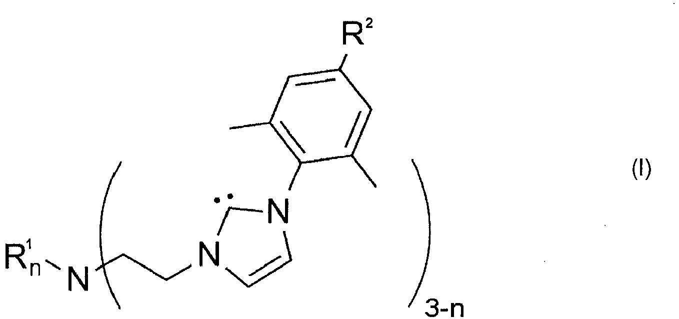 wobei
n für 1 oder 2 steht,
R¹ für einen Rest der allgemeinen Formel (III) steht, 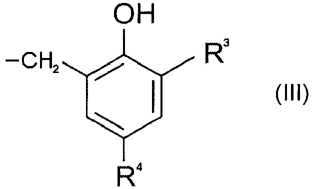
R² für Wasserstoff, OH, eine Alkyl-, Aryl-, Arylalkyl- oder Alkylarylgruppe, die auch ein- oder mehrfach mit OH und/oder F substituiert sein kann, steht, und
R³ und R⁴ unabhängig voneinander für Wasserstoff, eine Alkylgruppe mit 1 bis 22 C-Atomen, eine gegebenenfalls verbrückte Cycloalkylgruppe mit 5 bis 22 C-Atomen oder eine Alkylarylgruppe mit 7 bis 12 C-Atomen stehen, mit der Maßgabe, dass R³ ein Adamantylrest oder ein tert-Butylrest und/oder R⁴ ein Methylrest oder ein tert-Butylrest ist, enthält.

5. Mittel nach Anspruch 4, **dadurch gekennzeichnet, dass** es 0,001 Gew.-% bis 1,5 Gew.-%, insbesondere 0,1 Gew.-% bis 1 Gew.-% an Komplex mit dem Liganden gemäß allgemeiner Formel I enthält.

6. Mittel nach Anspruch 4 oder 5, **dadurch gekennzeichnet, dass** es Persauerstoffverbindung enthält.

7. Mittel nach Anspruch 6, **dadurch gekennzeichnet, dass** es 0,1 Gew.-% bis 50 Gew.-%, insbesondere von 5 Gew.-% bis 20 Gew.-% Persauerstoffverbindung enthält.

8. Verwendung nach einem der Ansprüche 1 bis 3 oder Mittel nach Anspruch 6 oder 7, **dadurch gekennzeichnet, dass** es sich um eine anorganische Persauerstoffverbindung handelt.

9. Verwendung oder Mittel nach einem der voranstehenden Ansprüche, **dadurch gekennzeichnet, dass** das Zentralatom des Komplexes aus Mn, Fe und deren Mischungen ausgewählt wird.

10. Verwendung oder Mittel nach einem der voranstehenden Ansprüche, **dadurch gekennzeichnet, dass** im Liganden der allgemeinen Formel (I) R¹ ein Rest der allgemeinen Formel (III) ist, in dem R³ ein Adamantylrest oder ein tert-Butylrest und R⁴ ein Methylrest oder ein tert-Butylrest ist.

## Claims

1. The use of a bleach catalyst in the form of a complex of a metal, selected from Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt and Zn, comprising one or more ligands of the general formula (I), 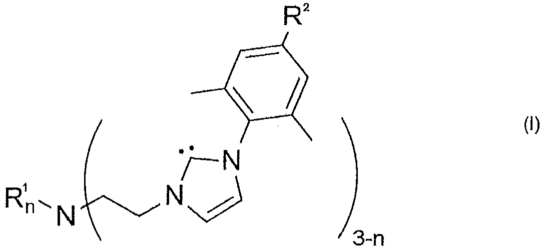 where
n represents 1 or 2,
R¹ represents a functional group of the general formula (III), 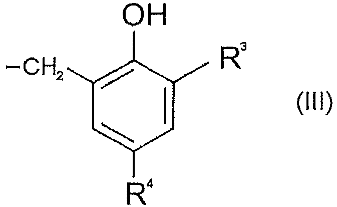
R² represents hydrogen, OH, an alkyl, aryl, arylalkyl or alkylaryl group, which can also be mono- or polysubstituted by OH and/or F, and
R³ and R⁴ represent, independently of one another, hydrogen, an alkyl group having from 1 to 22 carbon atoms, an optionally bridged cycloalkyl group having from 5 to 22 carbon atoms or an alkylaryl group having from 7 to 12 carbon atoms, with the proviso that R³ is an adamantyl functional group or a tert-butyl functional group and/or R⁴ is a methyl functional group or a tert-butyl functional group, as an activator for in particular inorganic peroxygen compounds in oxidizing, washing, cleaning or disinfectant solutions.

2. The use of a bleach catalyst in the form of a complex of a metal, selected from Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt and Zn, comprising one or more ligands of the general formula (I), 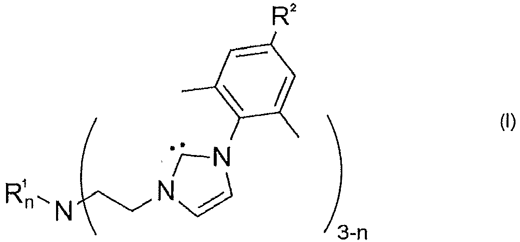 where
n represents 1 or 2,
R¹ represents a functional group of the general formula (III), 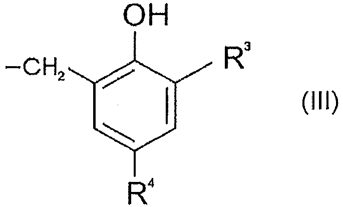
R² represents hydrogen, OH, an alkyl, aryl, arylalkyl or alkylaryl group, which can also be mono- or polysubstituted by OH and/or F, and
R³ and R⁴ represent, independently of one another, hydrogen, an alkyl group having from 1 to 22 carbon atoms, an optionally bridged cycloalkyl group having from 5 to 22 carbon atoms or an alkylaryl group having from 7 to 12 carbon atoms, with the proviso that R³ is an adamantyl functional group or a tert-butyl functional group and/or R⁴ is a methyl functional group or a tert-butyl functional group, for increasing the cleaning performance of washing and cleaning agents in aqueous, in particular surfactant-containing liquor.

3. The use of a combination of a peroxygen compound and a bleach catalyst in the form of a complex of a metal, selected from Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt and Zn, comprising one or more ligands of the general formula (I), 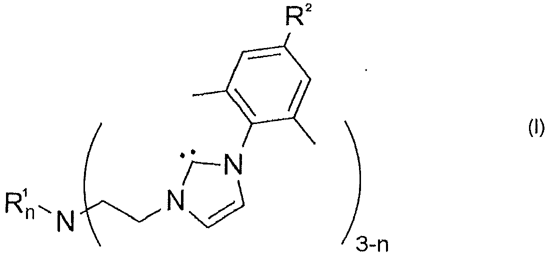 where
n represents 1 or 2,
R¹ represents a functional group of the general formula (III), 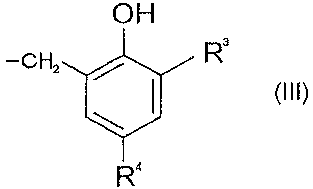
R² represents hydrogen, OH, an alkyl, aryl, arylalkyl or alkylaryl group, which can also be mono- or polysubstituted by OH and/or F, and
R³ and R⁴ represent, independently of one another, hydrogen, an alkyl group having from 1 to 22 carbon atoms, an optionally bridged cycloalkyl group having from 5 to 22 carbon atoms or an alkylaryl group having from 7 to 12 carbon atoms, with the proviso that R³ is an adamantyl functional group or a tert-butyl functional group and/or R⁴ is a methyl functional group or a tert-butyl functional group, for bleaching colored stains when washing textiles, in particular in aqueous, surfactant-containing liquor, or in cleaning solutions for hard surfaces, in particular dishes, for bleaching colored stains, in particular tea.

4. A washing agent, cleaning agent or disinfectant, **characterized in that** it contains a bleach catalyst in the form of a complex of a metal, selected from Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt and Zn, comprising one or more ligands of the general formula (I) 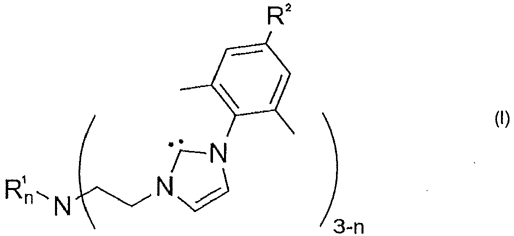 where
n represents 1 or 2,
R¹ represents a functional group of the general formula (III), 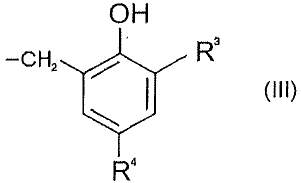
R² represents hydrogen, OH, an alkyl, aryl, arylalkyl or alkylaryl group, which can also be mono- or polysubstituted by OH and/or F, and
R³ and R⁴ represent, independently of one another, hydrogen, an alkyl group having from 1 to 22 carbon atoms, an optionally bridged cycloalkyl group having from 5 to 22 carbon atoms or an alkylaryl group having from 7 to 12 carbon atoms, with the proviso that R³ is an adamantyl functional group or a tert-butyl functional group and/or R⁴ is a methyl functional group or a tert-butyl functional group.

5. The agent according to claim 4, **characterized in that** it contains from 0.001 wt.% to 1.5 wt.%, in particular from 0.1 wt.% to 1 wt.% of a complex comprising the ligand according to the general formula I.

6. The agent according to claim 4 or 5, **characterized in that** it contains peroxygen compound.

7. The agent according to claim 6, **characterized in that** it contains from 0.1 wt.% to 50 wt.%, in particular from 5 wt.% to 20 wt.% peroxygen compound.

8. The use according to one of claims 1 to 3 or the agent according to claim 6 or 7, **characterized in that** it relates to an inorganic peroxygen compound.

9. The use or the agent according to one of the preceding claims, **characterized in that** the central atom of the complex is selected from Mn, Fe and mixtures thereof.

10. The use or the agent according to one of the preceding claims, **characterized in that**, in the ligand of the general formula (I), R¹ is a functional group of the general formula (III), in which R³ is an adamantyl functional group or a tert-butyl functional group and R⁴ is a methyl functional group or a tert-butyl functional group.

## Revendications

1. Utilisation d'un catalyseur de blanchiment sous la forme d'un complexe d'un métal sélectionné parmi les éléments suivants : Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt et Zn, doté d'un ou de plusieurs ligands de la formule générale (I), 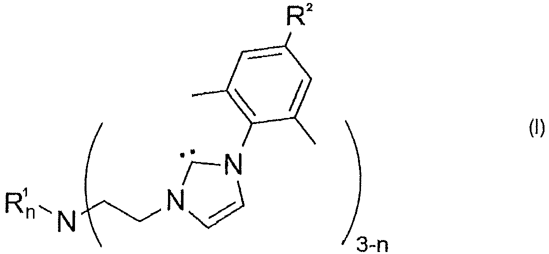 dans laquelle
n représente 1 ou 2,
R¹ représente un résidu de la formule générale (III), 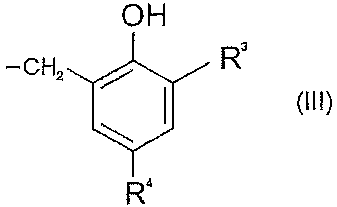
R² représente de l'hydrogène, OH, un groupe alkyle, aryle, arylalkyle ou alkylaryle, qui peut également être substitué une ou plusieurs fois avec OH et/ou F, et
R³ et R⁴ représentent indépendamment l'un de l'autre de l'hydrogène, un groupe alkyle doté de 1 à 22 atomes de C, un groupe cycloalkyle le cas échéant ponté doté de 5 à 22 atomes de C ou un groupe alkylaryle doté de 7 à 12 atomes de C, à la condition que R³ soit un résidu d'adamantyle ou un résidu de tert-butyle et/ou R⁴ soit un résidu de méthyle ou un résidu de tert-butyle,
en tant qu'activateur pour notamment des composés peroxygénés inorganiques dans des solutions d'oxydation, de lavage, de nettoyage ou de désinfection.

2. Utilisation d'un catalyseur de blanchiment sous la forme d'un complexe d'un métal sélectionné parmi les éléments suivants : Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt et Zn, doté d'un ou de plusieurs ligands de la formule générale (I), 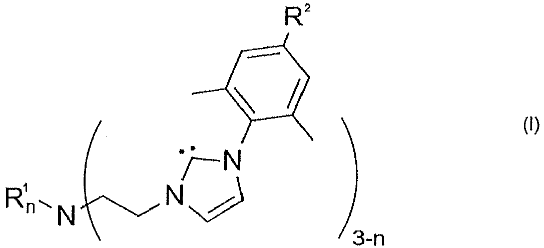 dans laquelle
n représente 1 ou 2,
R¹ représente un résidu de la formule générale (III), 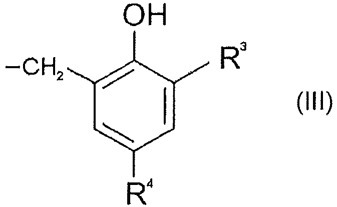
R² représente de l'hydrogène, OH, un groupe alkyle, aryle, arylalkyle ou alkylaryle, qui peut également être substitué une ou plusieurs fois avec OH et/ou F, et
R³ et R⁴ représentent indépendamment l'un de l'autre de l'hydrogène, un groupe alkyle doté de 1 à 22 atomes de C, un groupe cycloalkyle le cas échéant ponté doté de 5 à 22 atomes de C ou un groupe alkylaryle doté de 7 à 12 atomes de C, à la condition que R³ soit un résidu d'adamantyle ou un résidu de tert-butyle et/ou R⁴ soit un résidu de méthyle ou un résidu de tert-butyle,
pour renforcer l'effet nettoyant des agents de lavage et de nettoyage dans une matière tinctorale aqueuse, notamment une matière tinctorale contenant des tensioactifs.

3. Utilisation d'une combinaison de composé peroxygéné et d'un catalyseur de blanchiment sous la forme d'un complexe d'un métal sélectionné parmi les éléments suivants : Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt et Zn, doté d'un ou de plusieurs ligands de la formule générale (I), 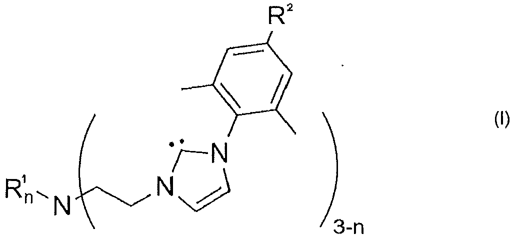 dans laquelle
n représente 1 ou 2,
R¹ représente un résidu de la formule générale (III), 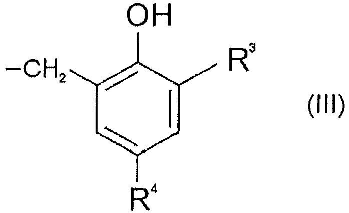
R² représente de l'hydrogène, OH, un groupe alkyle, aryle, arylalkyle ou alkylaryle, qui peut également être substitué une ou plusieurs fois avec OH et/ou F, et
R³ et R⁴ représentent indépendamment l'un de l'autre de l'hydrogène, un groupe alkyle doté de 1 à 22 atomes de C, un groupe cycloalkyle le cas échéant ponté doté de 5 à 22 atomes de C ou un groupe alkylaryle doté de 7 à 12 atomes de C, à la condition que R³ soit un résidu d'adamantyle ou un résidu de tert-butyle et/ou R⁴ soit un résidu de méthyle ou un résidu de tert-butyle,
pour le blanchiment de taches colorées lors du lavage de produits textiles, notamment dans une matière tinctorale aqueuse contenant des tensioactifs, ou dans des solutions nettoyantes pour des surfaces dures, notamment pour de la vaisselle, pour le blanchiment de taches colorées, notamment de thé.

4. Agent de lavage, de nettoyage ou de désinfection, **caractérisé en ce qu'**il contient un catalyseur de blanchiment sous la forme d'un complexe d'un métal sélectionné parmi les éléments suivants : Fe, Os, Mn, Re, Ce, Cu, Ag, Au, Co, Cr, Mo, W, Ru, Rh, Ir, Sc, Y, La, Ti, Zr, Hf, V, Nb, Ta, Ni, Pd, Pt et Zn, doté d'un ou de plusieurs ligands de la formule générale (I), 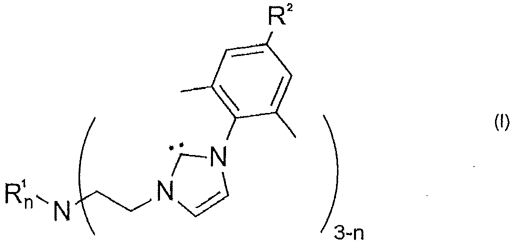 dans laquelle
n représente 1 ou 2,
R¹ représente un résidu de la formule générale (III), 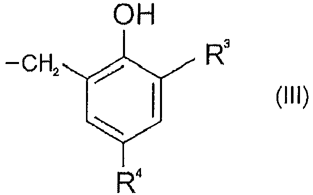
R² représente de l'hydrogène, OH, un groupe alkyle, aryle, arylalkyle ou alkylaryle, qui peut également être substitué une ou plusieurs fois avec OH et/ou F, et
R³ et R⁴ représentent indépendamment l'un de l'autre de l'hydrogène, un groupe alkyle doté de 1 à 22 atomes de C, un groupe cycloalkyle le cas échéant ponté doté de 5 à 22 atomes de C ou un groupe alkylaryle doté de 7 à 12 atomes de C, à la condition que R³ soit un résidu d'adamantyle ou un résidu de tert-butyle et/ou R⁴ soit un résidu de méthyle ou un résidu de tert-butyle.

5. Agent selon la revendication 4, **caractérisé en ce qu'**il contient 0,001 % en poids à 1,5 % en poids, notamment 0,1 % en poids à 1 % en poids en complexe avec le ligand selon la formule générale I.

6. Agent selon la revendication 4 ou 5, **caractérisé en ce qu'**il contient un composé peroxygéné.

7. Agent selon la revendication 6, **caractérisé en ce qu'**il contient 0,1 % en poids à 50 % en poids, notamment de 5 % en poids à 20 % en poids de composé peroxygéné.

8. Utilisation selon l'une quelconque des revendications 1 à 3 ou agent selon la revendication 6 ou 7, **caractérisé en ce qu'**il s'agit d'un composé peroxygéné inorganique.

9. Utilisation ou agent selon l'une quelconque des revendications précédentes, **caractérisé en ce que** l'atome central du complexe est sélectionné parmi Mn, Fe et leurs mélanges.

10. Utilisation ou agent selon l'une quelconque des revendications précédentes, **caractérisé en ce que**, dans les ligands de la formule générale (I), R¹ est un résidu de la formule générale (III), dans lequel R³ est un résidu d'adamantyle ou un résidu de tert-butyle et R⁴ est un résidu de méthyle ou un résidu de tert-butyle.
